# EUROPÄISCHE PATENTANMELDUNG

(11) **EP 2 982 549 A1**
(43) Veröffentlichungstag der Anmeldung: **10.02.2016**
(21) Anmeldenummer: 14075053.0
(22) Anmeldetag: 05.08.2014
(51) Int. Cl.: B60R 25/04, B60R 25/20

(54) **OBD II Diagnose Lese- und Schreibschutz**

(71) Anmelder: C & S Fahrzeugtechnik GmbH, 12165 Berlin (DE)
(72) Erfinder: Sellerie, Burkhard, 12165 Berlin (DE); Christ, Oliver, 12167 Berlin Steglitz (DE)

(57) **Zusammenfassung**

2.1 Mit Hilfe von Computerprogrammen kann über die genormte OBD-II-Buchse im Fahrzeuginneren die elektronische Wegfahrsperre von Fahrzeugen deaktiviert, der Motor gestartet und das Fahrzeug verbracht werden. Serienmäßig verbaute Alarmanlagen bieten dagegen keinen Schutz. Über die OBD-II-Schnittstelle können weiterhin Abgaswerte manipuliert und Steuerdaten verändert werden, da ein Zugriff auf die gesamte Bordelektronik möglich ist.

2.2 Der OBD II Diagnose Lese- und Schreibschutz verhindert Kraftfahrzeugdiebstähle durch den Zugriff auf die Bordelektronik über die On-Board-Diagnose Buchse durch farbliche Vereinheitlichung der Kabel und individualisierte Kabelneuverteilung, inkl. Austausch der OBD-II-Buchse am Fahrzeug. Es handelt sich dabei um eine Kupplung zwischen der serienmäßig verbauten OBD-II-Buchse und dem Fahrzeug. Der OBD II Diagnose Lese- und Schreibschutz verhindert den unbefugten Zugriff auf die Fahrzeugelektronik über die Diagnoseschnittstelle im Fahrzeuginnenraum.

2.3 Es wird ein Schutz von Fahrzeugen vor Diebstahl durch Entsperrung der elektrischen Wegfahrsperre und Zündung des Motors über die OBD-II-Schnittstelle sowie Schutz vor Manipulation der Fahrzeugelektronik (Software, Steuergerät, etc.) gewährleistet.

3. Gesamtansicht des Verfahrens zum Schutz von Fahrzeugen vor Manipulation und Diebstahl durch Zugriff auf die serienmäßige OBD-II-Schnittstelle

## Beschreibung

### 1 Zusammenfassung

Der OBD II Diagnose Lese- und Schreibschutz beschreibt ein Verfahren zum Schutz von Fahrzeugen vor Manipulation und Diebstahl. Es handelt sich dabei um eine Kupplung zwischen der serienmäßig verbauten OBD-II-Buchse und dem Fahrzeug. Der OBD II Diagnose Lese- und Schreibschutz verhindert Kraftfahrzeugdiebstähle durch den Zugriff auf die Bordelektronik über die On-Board-Diagnose Buchse durch farbliche Vereinheitlichung der Kabel und individualisierte Kabelneuverteilung, inkl. Austausch der OBD-II-Buchse am Fahrzeug. Der Fahrzeughalter erhält die individuell angepasste Kupplung zwischen Fahrzeug und OBD-II-Buchse zur sicheren Verwahrung und zur Mitnahme zu Service-, Werkstatt- sowie zu Hauptuntersuchungen.

### 2 Technisches Gebiet der Erfindung

Der OBD II Diagnose Lese- und Schreibschutz verhindert den unbefugten Zugriff auf die Fahrzeugelektronik über die Diagnoseschnittstelle im Fahrzeuginnenraum. Es wird somit ein Schutz von Fahrzeugen vor Diebstahl durch Entsperrung der elektrischen Wegfahrsperre und Zündung des Motors über die OBD-II-Schnittstelle sowie Schutz vor Manipulation der Fahrzeugelektronik (Software, Steuergerät, etc.) gewährleistet. Die Erfindung ist in den Bereichen Fahrzeugelektronik, Fahrzeugdiagnose und den entsprechenden Sicherungseinrichtungen gegen unbefugte Benutzung, Wegfahrsperre und Diebstahlschutz einzuordnen.

### 3 Stand der Technik

### 3.1 OBD II Technologie

Die On-Board-Diagnose II (OBD II) dient in erster Linie dem Auslesen emissionsrelevanter Fahrzeugdaten, um die Einhaltung von Emissionsgrenzwerten zu überwachen. [1]

Seit 1996 müssen alle Personenkraftfahrzeuge mit Benzinmotor die OBD II unterstützen und gem. § 1968 California Air Resources Board (CARB) eine Schnittstelle im Fahrzeuginnenraum ohne Hilfsmittel erreichbar sein.[2] Fahrzeugdaten können mittels dieser weltweit einheitlichen Schnittstelle (OBD-II-Buchse)[3] ausgelesen und Parameter des Fahrzeugcomputers geändert werden.[4] Dies erfolgt in der Regel beim Fahrzeugservice durch Werkstätten.[5] Die Schnittstelle dient der Datenübertragung mittels eines Lese-und Schreibgerätes in beide Richtungen, d.h. es werden Fahrzeugdaten ausgelesen, es können aber auch Daten in das Fahrzeug eingelesen werden.[6] Für die Datenübertragung stehen fahrzeugseitig 16 Pins zur Verfügung, wobei vier Pins ein bestimmtes Protokoll zugeordnet ist und die übrigen Pins der freien Verwendung durch den Fahrzeughersteller verbleiben.[7] Die OBD II zielt dabei nicht auf eine Veränderbarkeit der Fahrzeugdaten ab, sondern dient der Überwachung abgasrelevanter Baugruppen, der Speicherung von Fehlerdaten und dem Schutz gefährdeter Komponenten. [8]

Es gibt in den USA bereits Überlegungen eine OBD III einzuführen. [9] Diese Weiterentwicklung sendet selbstständig Fehlermeldungen sowie die Fahrzeugidentifikationsnummer an eine Behörde, um die umgehende Behebung von emissionsrelevanten Fehlern zu überwachen. [10]

### 3.2 Mängel der OBD-II-Technologie

Die OBD-II-Technologie wird serienmäßig in Fahrzeugen verwendet. Über die Schnittstelle können Fehler ausgelesen und Änderungen an der Fahrzeugelektronik vorgenommen werden. Dabei sind die Verschiedenheit der Fahrzeugvarianten[11] sowie die Anpassung an neue Motoren zu beachten.[12] Die serienmäßige Verwendung dient Economies of Scale,[13] macht die Fahrzeuge jedoch für Manipulation und Diebstahl anfällig. Bereits die Entwicklungen der Tuningbranche hängen die Schutzmaßnahmen der Hersteller ab, [14] sodass ein ausreichender Schutz vor Manipulation als nicht gewährleistet angesehen werden kann. [15]

Flexible Datenspeicher haben den Vorteil, dass Fahrzeughersteller mit einer Steuergeräte-Hardware mehrere Motor- und Applikationsvarianten mit individuellen Steuerungsdaten abdecken.[16] Damit sind jedoch komplette Baureihen von Fahrzeugen vereinheitlicht, wodurch der Anreiz einer unberechtigten Schutzdurchbrechung zum Zwecke des Diebstahls von Fahrzeugen gegeben ist.

### 4 Technische Aufgabe und Lösung

### 4.1 Diebstahl aktuell

Zur Sicherung gegen unbefugte Benutzung sind moderne Fahrzeuge u.a. mit elektronischen Wegfahrsperren ausgerüstet. [17] Die Sicherheitsausstattung von Fahrzeugen basiert auf Serientechnologie.

Mit Hilfe von Computerprogrammen kann über die OBD-II-Buchse im Fahrzeuginneren die elektronische Wegfahrsperre von Fahrzeugen deaktiviert und der Motor gestartet werden.[18] Durch das Computerprogramm und die Fahrzeugidentifikationsnummer wird das Fahrzeug A als Fahrzeug B neu deklariert.[19] Für Fahrzeug B liegt der Logarithmus vor und die Software öffnet das elektronische Zündschloss sowie das Lenkradschloss. Über die Software wird eine Startfreigabe erteilt und das Fahrzeug kann durch Unbefugte verbracht werden. Auch die serienmäßig verbauten Alarmanlagen bieten dabei keinen Schutz. Fahrzeuge sind somit durch die serienmäßige Sicherheitsausstattung nur unzureichend vor Diebstahl geschützt.

In 2011 wurden bundesweit 18.063 Personenkraftwagen gestohlen. Mit 10.920 Diebstählen sind Volkswagen, Audi und BMW die am meisten gestohlenen PKW-Marken. Während durchschnittlich 0,5 PKW je 1.000 Einwohner gestohlen werden, sind es bei der BMW X-Serie weit über das 20-fache. Hier liegt zudem der Schadensaufwand dreimal höher als im Durchschnitt. Nordrhein-Westfalen und Berlin-Brandenburg führen die absoluten Diebstähle nach Bundesländern an. [20]

### 4.2 Manipulation der Fahrzeugelektronik

Über die OBD-II-Schnittstelle können Abgaswerte manipuliert und Steuerdaten verändert werden, da ein Zugriff auf die gesamte Bordelektronik möglich ist. Zudem gleicht sich das Motorsteuergerät mit dem Diagnoseinterface ab. Die Schnittstelle ist dabei genormt. [21]

### 4.3 Lösung des Problems

Die Lösung des oben beschriebenen Problems wird durch zwei Komponenten erreicht: Die serienmäßige, fahrzeugseitige OBD-II-Buchse wird ersetzt und die Kabel zwischen Fahrzeug und OBD-II-Buchse neuverteilt. Bei dem Kupplungsstück sowie bei den Kabeln am Fahrzeug werden die Kabel farblich vereinheitlicht, die Kabel zwischen Fahrzeug und originaler OBD-II-Buchse neu verteilt und die OBD-II-Buchse am Fahrzeug durch eine andere Buchse ausgetauscht. Der Fahrzeughalter erhält als Einziger die individuelle Kupplung zwischen Fahrzeug und OBD-II-Buchse, sodass Service sowie Hauptuntersuchung weiterhin möglich sind.

### 4.3.1 Farbliche Vereinheitlichung der Kabel am Fahrzeug

Die Kabel des Fahrzeugkabelbaums zur originären OBD-II-Buchse werden soweit wie möglich gekürzt und farblich einheitliche Kabel an den originalen Kabelbaum des Fahrzeugs angebracht. An den farblich einheitlichen Kabelbaum wird eine neue Buchse, die sich von der originalen OBD-II-Buchse unterscheidet, fahrzeugseitig angebracht. Die neuen Kabelverbindungen vom Fahrzeug zur neuen Buchse werden zweifach geschirmt und mit einem Gewebeschlauch ummantelt. Die farblich vereinheitlichten Kabel sind nun an eine 15-polige Buchse [22] (z.B. R232) verbunden und können nur noch schwer voneinander unterschieden werden.

### 4.3.2 Individuelle Neuverteilung der Kabel am Fahrzeug

Sämtliche Pins der Kabel zwischen Fahrzeug und neuer Buchse sowie vom neuen Stecker der Kupplung zur Fahrzeugbuchse und originaler OBD-II-Buchse werden neu verteilt. [23] Dabei stehen durch die derzeit verwendete Verbindung bis zu 15! (1,3¹²) mögliche Kombinationen zur Verfügung,[24] die Kabel zu verteilen, wodurch es unmöglich ist, die richtige Kabelkombination in kurzer Zeit herauszufinden. Auch hier werden die Kabel zweifach geschirmt und mit Gewebeschlauch ummantelt. Die Kupplung ist ca. 10 cm lang.

### 4.3.3 Austausch der OBD-II-Buchse

Am Fahrzeug wird eine neue Buchse (z.B. R232-Buchse, 15-polig) angebracht. [25] Dabei ist es unerheblich, welche Art von Buchse verwendet wird, solange diese sich von einer OBD-II-Buchse unterscheidet. [26] Die neue Buchse kann nicht mit einem Diagnose-Tool, einer DriveBox oder anderen Art von serienmäßiger Verbindung zwischen Fahrzeug und externem Gerät verbunden werden, da dieser in der Verbindungsform nicht der OBD-II-Buchse gleicht und die Pins eine individuelle, von der Serienbelegung abweichende, Zuteilung aufweisen. Die Zuteilung ist bei jedem Fahrzeug verschieden (1,3¹² Kombinationsmöglichkeiten) und kann nicht ohne enormen Zeitaufwand herausgefunden oder rückgebaut werden. Der Austausch der OBD-II-Buchse stellt bereits den Diebstahlschutz dar. Allerdings wird die Kupplung benötigt, um das Fahrzeug weiterhin problemlos warten und kontrollieren zu können.

### 4.3.4 Kupplung zwischen neuer Buchse und OBD-II-Buchse

Die Kupplung zwischen neuer, fahrzeugseitiger Buchse und originaler OBD-II-Buchse ist einmalig bezogen auf die möglichen Zuteilungskombinationen (15! = 1,3¹²). Reversibel ist die Kupplung nur am Originalfahrzeug. Eine Nachbestellung der Kupplung ist ausgeschlossen, wenn nicht die genaue Kombination hinterlegt ist. Für einen Nach- oder Rückbau der Kupplung sind das Fahrzeug sowie die originale Belegung der OBD-II-Buchse für das Fahrzeug seitens des Herstellers erforderlich. Der Aufwand des Rückbaus beträgt ca. vier Stunden.

### 5 Durch die Erfindung erzielte Vorteile

Durch OBD II Diagnose Lese- und Schreibschutz, d.h. dem Verfahren zum Austausch der originalen OBD-II-Buchse sowie Erstellen eines Kupplungsstücks zwischen Fahrzeug und serienmäßiger OBD-II-Buchse, werden Fahrzeuge vor Diebstahl durch Entsperren der elektrischen Wegfahrsperre und Zündung des Motors sowie vor unberechtigter Manipulation der Software, des Steuergerätes sowie der Abgaswerte des Fahrzeugs geschützt. Mit der Kupplung sind Werkstattservice und Hauptuntersuchung weiterhin problemlos möglich.

### 6 Gewerbliche Anwendbarkeit

Bei der o.g. Anzahl an Fahrzeugdiebstählen - allein in Deutschland - ist eine auf Gewinn ausgerichtete Tätigkeit im Sinne der Herstellung des OBD II Diagnose Lese- und Schreibschutzes zweifelsfrei möglich. Bei dem beschriebenen Verfahren handelt es sich zudem nicht um ein Diagnostizierverfahren.

### 7 Beschreibung der Abbildungen

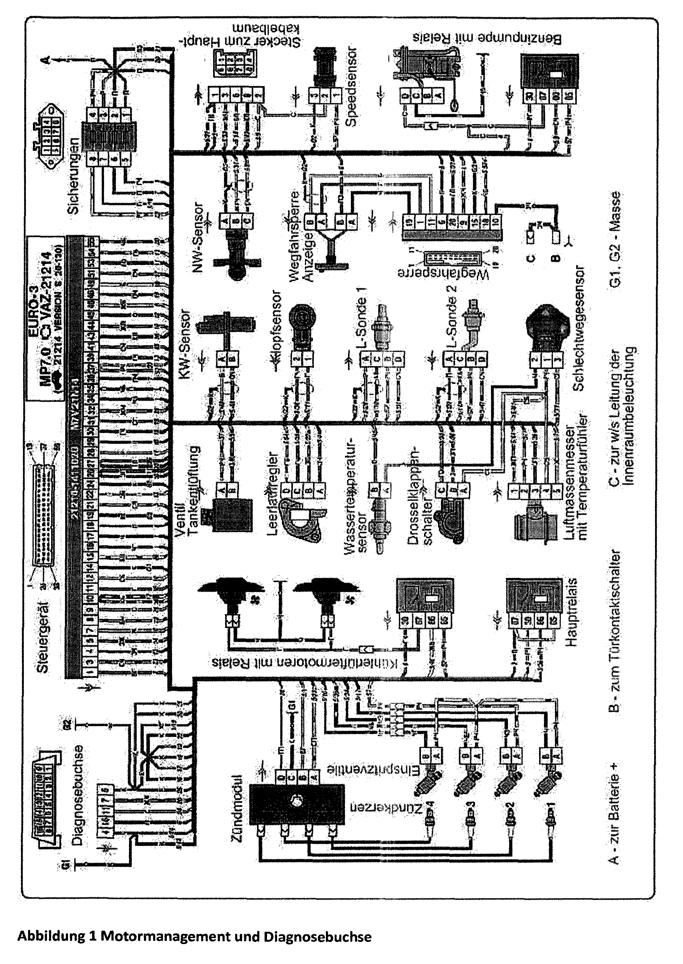

### 7.1 Abbildung 1 Motormanagement und Diagnosebuchse

Abbildung 1 zeigt das Motormanagement und die Verbindungen zur Diagnosebuchse. Aus der Abbildung wird deutlich, dass über die Diagnoseschnittstelle alle wichtigen Parameter des Motormanagements sowie der Bordelektronik, zum Lesen und Schreiben, zugänglich sind.

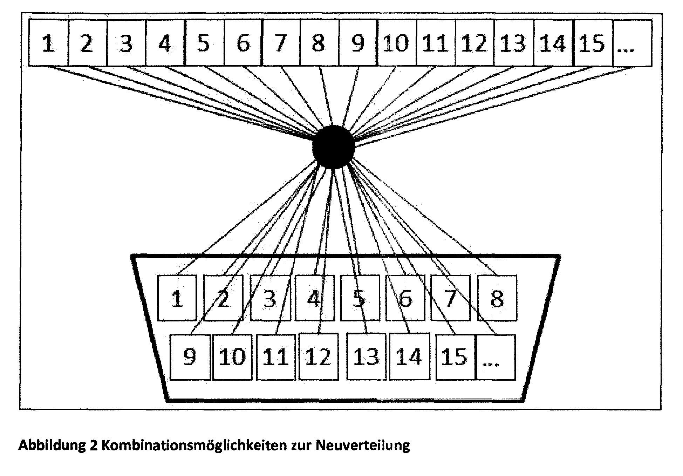

### 7.2 Abbildung 2 Kombinationsmöglichkeiten zur Neuverteilung

Die Abbildung 2 zeigt die Anzahl der Pins derzeit verfügbarer und serienmäßig verbauter OBD-II-Buchsen. Die 15 Pins sind teilweise genormt, teilweise herstellerspezifisch belegt. Für eine Neuverteilung stehen 15! Möglichkeiten (1.307.674.368.000) zur Verfügung. Ein Reverse-Engineering der Belegung der originalen OBD-II-Buchse durch Diebe ist somit ohne erheblichen Zeitaufwand ausgeschlossen.

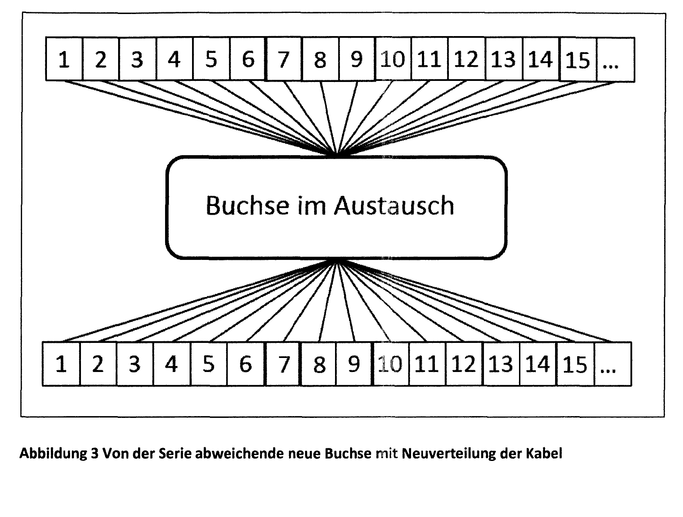

### 7.3 Abbildung 3 Von der Serie abweichende neue Buchse mit Neuverteilung der Kabel

Abbildung 3 zeigt schematisch die Buchse, die die OBD-II-Buchse am Fahrzeug ersetzt. Mit der neuen Buchse (z.B. eine 15-polige R232-Buchse). Die Kabel vom Fahrzeug zur Buchse sind farblich vereinheitlicht, um das o.g. Reverse-Engineering nochmals zu erschweren, werden zweifach geschirmt und mit Gewebeschlauch ummantelt.

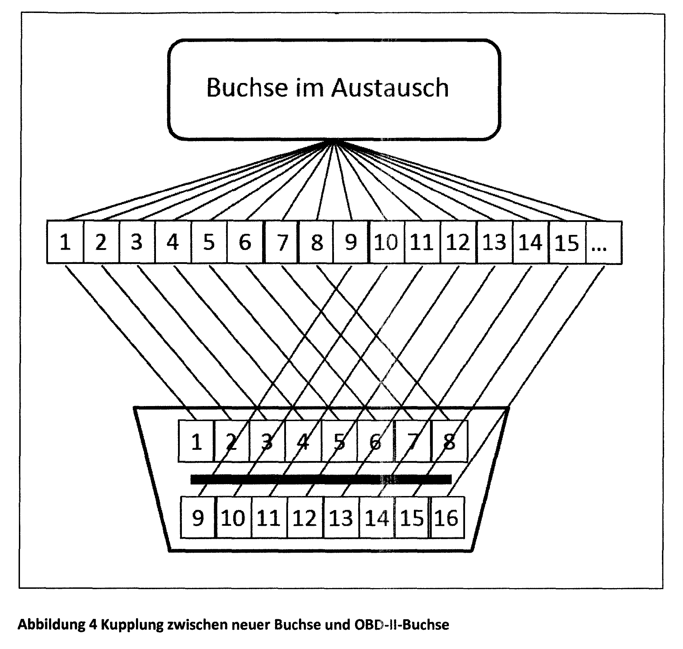

### 7.4 Abbildung 4 Kupplung zwischen neuer Buchse und OBD-II-Buchse

Die Kupplung zwischen der neuen Buchse am Fahrzeug und der originalen OBD-II-Buche wird ebenfalls mit farblich vereinheitlichen Kabeln gefertigt, zweifach geschirmt und mit Gewebeschlauch ummantelt. Die Kupplung kann mit einer Karte mit Fahrzeugdaten sowie einer Notfallnummer versehen werden.

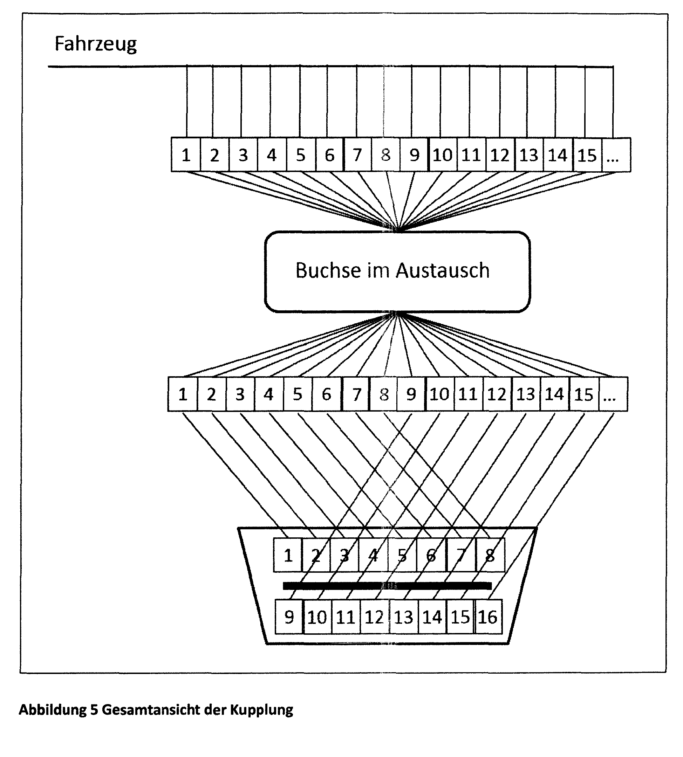

### 7.5 Abbildung 5 Gesamtansicht der Kupplung

Abbildung 5 ist eine Gesamtansicht des zu patentierenden Verfahrens, einschließlich der Kupplung. Vom Fahrzeug ausgehend können 15 Pins mit der neuen Buchse am Fahrzeug belegt werden. Die Kabel vom Fahrzeug zur neuen Buchse sind farblich einheitlich. Die Kupplung besteht zwischen originaler OBD-II-Buchse und neuer Buchse am Fahrzeug mittels eines passenden Steckers zur neuen fahrzeugseitigen Buchse.

### 9 Endnoten

[1] Die Pflicht zur Einführung von OBD-Systemen basiert dabei auf verschiedenen Vorschriften zur Schadstoffminderung. Vgl. Rokosch, On-Board-Diagnose, S. 145.
[2] Seit 1997 gilt dies ebenfalls für alle Dieselfahrzeuge und Lastkraftwagen. Für viele Schäffer, Fahrzeugdiagnose, S. 21. In Kalifornien galt die On-Board-Diagnose (OBD I) für Neufahrzeuge ab 1988.
[3] Siehe Patente EP000001606503A1, AT000000415549E, CN000201638377U und DE202004000947U1. Siehe auch Marscholik et al. in: Wallentowitz / Reif, Handbuch Kraftfahrzeugelektronik, S. 645.
[4] So Schäffer, Fahrzeugdiagnose, S. 29.
[5] Schnittstellenprotokoll nach Normen ISO 9141 und 14230. Vgl. Adomeit in: Braess / Seiffert, Handbuch Kraftfahrzeugtechnik, S. 217.
[6] Unter "einlesen" wird hier etwa die Änderung von Kennlinienfeldern des Motormanagements verstanden. Moderne Datenspeicher (Flash-EPROM) gestatten auch ein Überschreiben der Daten. Vgl. Adomeit in: Braess / Seiffert, Handbuch Kraftfahrzeugtechnik, S. 217.
[7] Zwei herausstehende Pins dienen der Masseverbindung. Vgl. Schäffer, Fahrzeugdiagnose, S. 23. Zum Funktionsumfang der Prüfebenen siehe Rokosch, On-Board-Diagnose, S. 164 ff. und Marscholik et al. in: Wallentowitz / Reif, Handbuch Kraftfahrzeugelektronik, S. 646.
[8] Vgl. Rokosch, On-Board-Diagnose, S. 147 und 237.
[9] Vgl. Rokosch, On-Board-Diagnose, S. 145.
[10] Vgl. Fritzsch et al. in: Wallentowitz / Reif, Handbuch Kraftfahrzeugelektronik, S. 25.
[11] Fahrzeuge werden in verschiedenen Karosserievarianten gebaut, mit unterschiedlichen Getrieben versehen und in diverse Länder mit spezifischen Anforderungen verkauft. Vgl. Rokosch, On-Board-Diagnose, S. 215.
[12] Weiterhin können durch den fehlenden Schreibschutz im Rahmen eines Chiptunings die Applikationsdaten (Kennlinienfelder) verändert werden, was zum Erlöschen der Herstellergarantie führt. Vgl. Adomeit in: Braess / Seiffert, Handbuch Kraftfahrzeugtechnik, S. 217.
[13] Vgl. Marscholik et al. in: Wallentowitz / Reif, Handbuch Kraftfahrzeugelektronik, S. 646.
[14] So Rokosch, On-Board-Diagnose, S. 150.
[15] Vgl. Borgeest, Elektronik in der Fahrzeugtechnik, S. 342.
[16] Vgl. Adomeit in: Braess / Seiffert, Handbuch Kraftfahrzeugtechnik, S. 217.
[17] Die Wegfahrsperre erfordert entweder die Außerbetriebsetzung von mindestens zwei autarken Fahrzeugstromkreisen (Anlasser, Zündung, Kraftstoffversorgung) oder die Codierung mindestens einer Steuerungseinheit. Vgl. Fritzsche in: Braess / Seiffert, Handbuch Kraftfahrzeugtechnik, S. 25. Siehe auch Borgeest, Elektronik in der Fahrzeugtechnik, S. 340.
[18] Ausführlich zur Manipulation der Fahrzeugelektronik siehe Koscher et al., IEEE 2010, S. 447 ff. Zur Flash-Programmierung siehe Borgeest, Elektronik in der Fahrzeugtechnik, S. 231 ff.
[19] Die Fahrzeugidentifikationsnummer ist insbesondere bei Volkswagen immer außen sichtbar, da in den USA die Fahrzeugidentifikationsnummer sichtbar sein muss und VW in anderen Absatzmärkten keinen Unterschied hierzu macht. Das macht Fahrzeuge der Marke VW besonders anfällig für Diebstähle, was die Statistik beweist.
[20] Vgl. GDV, Tabellen zum Autodiebstahl 2012, http://www.gdv.de/2013/09/autodiebstahl-2012-alle-zahlen/#Kfz-Statistik gesamt/, zuletzt aufgerufen am 08.07.2014
[21] Vgl. Fn. 3.
[22] Eine Buchse mit mehr als 15 Polen zu verwenden ist derzeit nicht notwendig, da über OBD II derzeit maximal 12 Pins belegt werden; Stand 03/2012. In Zukunft kann sich das insbesondere durch OBD III ändern.
[23] Hierzu zählen auch die Masse-Pins.
[24] Durch eine höhere Anzahl Pins lässt sich die Anzahl der möglichen Kombinationen bei Bedarf erhöhen.
[25] Aktuell ist kein Fahrzeug mit Vollbelegung der 16 Pins ausgerüstet.
[26] Auch die Verwendung einer OBD-II-Buchse ist aufgrund der individuellen Neuverteilung theoretische möglich. Jedoch könnten bei Anschluss eines originalen OBD-II-Steckers aufgrund der Neuverteilung der Pins an der Buchse des Fahrzeugs Schäden nicht ausgeschlossen werden.

### 10 Literatur

Adomeit, Phillipp, Ottomotoren in: Braess, Hans-Hermann / Seiffert, Ulrich (Hrsg.), Vieweg Handbuch Kraftfahrzeugtechnik, Vieweg + Teubner Verlag, 6. Aufl., Wiesbaden, 2011.
(zit.: Adomeit in: Braess / Seiffert, Handbuch Kraftfahrzeugtechnik)

Borgeest, Kai, Elektronik in der Fahrzeugtechnik - Hardware, Software, Systeme und Projektmanagement, Vieweg + Teubner Verlag, 2. Aufl., Wiesbaden, 2010.
(zit.: Borgeest, Elektronik in der Fahrzeugtechnik)

Gesamtverband der Deutschen Versicherungswirtschaft e.V. (GDV), http://www.gdv.de/wp-content/uploads/2012/01/37_Autoklau_Tabellen_Deutschlandkartel.pdf, zuletzt aufgerufen am 01.03.2012.
(zit.: GDV)

Fritsch, Jürgen/Geyer, Dirk/Graupner, Olaf/Kaesbauer, Michael/Schneider, Dirk/Schüle, Harry/Treinies, Stefan, Motormanagement in: Wallentowitz, Henning / Reif, Konrad (Hrsg.), Handbuch Kraftfahrzeugelektronik, Vieweg + Teubner Verlag, 2. Aufl., Wiesbaden, 2011.
(zit. Fritsch et al. in: Wallentowitz / Reif, Handbuch Kraftfahrzeugelektronik)

Fritzsche, Egbert, Normen in: Braess, Hans-Hermann/Seiffert, Ulrich (Hrsg.), Vieweg Handbuch Kraftfahrzeugtechnik, Vieweg + Teubner Verlag, 6. Aufl., Wiesbaden, 2011.
(zit.: Fritzsche in: Braess / Seiffert, Handbuch Kraftfahrzeugtechnik)

Koscher, Karl / Czeskis, Alexei / Roesner, Franziska / Patel, Shwetak / Kohno, Tadayoshi / Checkoway, Stephen/McCoy, Damon/Kantor, Brian/Anderson, Danny/Shacham, Hovav/Savage, Stefan, Experimental Security Analysis of a Modern Automobile, IEEE 2010, Symposium on Security and Privacy, S. 447 - 462.
(zit.: Koscher et al., IEEE 2010)

Marscholik, Christoph / Rösch, Bernd / Steffelbauer, Markus, Diagnose in: Wallentowitz, Henning / Reif, Konrad (Hrsg.), Handbuch Kraftfahrzeugelektronik, Vieweg + Teubner Verlag, 2. Aufl., Wiesbaden, 2011.
(zit. Marscholik et al. in: Wallentowitz / Reif, Handbuch Kraftfahrzeugelektronik)

Rokosch, Uwe, On-Board-Diagnose und moderne Abgasnachbehandlung, Vogel Industrie Medien Verlag, 1. Aufl., Würzburg, 2006.
(zit.: Rokosch, On-Board-Diagnose)

Schäffer, Florian, Fahrzeugdiagnose mit OBD - OBD I, OBD II sowie KW 1281, Elektor-Verlag, 3. Aufl., Aachen, 2010.
(zit.: Schäffer, Fahrzeugdiagnose)

### Normen:

ISO 9141, ISO TC22: Road vehicles - Diagnostic systems - Requirements for interchange of digital information, 1. Ausg., ISO 9141:1989.
ISO 14230, ICO TC22, Road vehicles - Diagnostic systems - Keyword Protocol 2000, 1. Ausg., ISO 14230:1999.

### Patente:

Österreich, AT000000415549E, ON-BOARD-DIAGNOSE, veröffentlicht am 15.12.2008.

China, CN000201638377U, OBD interface data transmission device, veröffentlicht am 17.11.2010.

Deutschland, DE202004000947U1, OBD-Stecker, veröffentlicht am 19.08.2004.

Europäisches Patentamt, EP000001606503A1, ON-BOARD-DIAGNOSE, veröffentlicht am 21.12.2005.

## Patentansprüche

1. Geschützt werden soll das Verfahren zum Austausch der originalen, am Fahrzeug verbauten OBD-II-Buchse, zum Schutz von Fahrzeugen vor Diebstahl, Manipulation des Motormanagements, der Bordelektronik oder anderer Parameter über die OBD-II-Schnittstelle.
**dadurch gekennzeichnet,**
**dass** die OBD-II-Buchse durch eine neue Buchse (z.B. R232, 15-polig) ersetzt wird, die Kabel der OBD-II-Buchse mit derzeit bis zu 15! (1,3¹²) Kombinationsmöglichkeiten neuverteilt werden und die Kabel der neuen Buchse am Fahrzeug sowie an der Kupplung zwischen Stecker und originaler OBD-II-Buchse farblich vereinheitlicht werden.

2. Schutz nach einem der vorhergehenden Ansprüche
**dadurch gekennzeichnet,**
**dass** die Kupplung zwischen Fahrzeug und OBD-II-Buchse kundenindividuell angefertigt wird und ein Rückbau einen erheblichen Zeitaufwand verursacht.

3. Schutz nach einem der vorhergehenden Ansprüche
**dadurch gekennzeichnet,**
**dass** eine unberechtigte Manipulation der Abgaswerte verhindert wird.

4. Schutz nach einem der vorhergehenden Ansprüche
**dadurch gekennzeichnet,**
**dass** eine unberechtigte Manipulation des Steuergerätes, des Motormanagements und der Bordelektronik verhindert wird.

5. Schutz nach einem der vorhergehenden Ansprüche
**dadurch gekennzeichnet,**
**dass** ein Entsperren der elektronischen Wegfahrsperre etwa durch eine DriveBox oder andere externe Geräte ausgeschlossen wird.
